(19) Europäisches Patentamt
European Patent Office
Office européen des brevets

(11) **EP 2 393 286 B1**

(12) **EUROPÄISCHE PATENTSCHRIFT**

(45) Veröffentlichungstag und Bekanntmachung des Hinweises auf die Patenterteilung:
**28.01.2015  Patentblatt 2015/05**

(51) Int Cl.:
**H04N 5/365** *(2011.01)*          **H04N 5/33** *(2006.01)*

(21) Anmeldenummer: **11168435.3**

(22) Anmeldetag: **01.06.2011**

(54) **Verfahren und Vorrichtung zur Korrektur einer uneinheitlichen Sensitivität von Detektorelementen bei Wärmebildkameras**

Method and device for correcting non-uniform sensitivity of detector elements of thermal image cameras

Procédé et dispositif de correction d'une sensibilité irrégulière d'éléments de détecteur dans des caméras thermiques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2010  DE 102010023168**

(43) Veröffentlichungstag der Anmeldung:
**07.12.2011  Patentblatt 2011/49**

(73) Patentinhaber: **ESW GmbH**
**22880 Wedel (DE)**

(72) Erfinder: **Weisbach, Frank**
**07747 Jena (DE)**

(74) Vertreter: **Freitag, Joachim et al**
**Patentanwälte**
**Oehmke & Kollegen**
**Neugasse 13**
**07743 Jena (DE)**

(56) Entgegenhaltungen:
WO-A1-97/28639          GB-A- 2 336 051
JP-A- 2002 310 804      US-A- 5 118 943

## Beschreibung

Die Erfindung betrifft ein Verfahren zur Korrektur einer uneinheitlichen Sensitivität von Detektorelementen bei Wärmebildkameras. Die Erfindung betrifft ferner eine Wärmebildkamera, mit der hinsichtlich einer uneinheitlichen Sensitivität von Detektorelementen bei Wärmebildkameras korrigierte Wärmebilder bereitgestellt werden können.

Unter einem Wärmebild wird ein durch optische Abbildung von Infrarot- oder Wärmestrahlung erzeugtes Bild verstanden. Technisch lässt sich ein Wärmebild, insbesondere im nahen Infrarot-Bereich, durch die für sichtbares Licht bekannten und üblichen Technologien, wie die Verwendung von CCD- oder CMOS-Sensoren, erzeugen. Ein Wärmebild lässt sich aber insbesondere im mittleren und fernen Infrarot-Bereich (Definition der Strahlungsbänder nach DIN 5031 Teil 7, 1984-01) durch eine Matrix aus temperatursensitiven Widerständen (Detektorelemente), wie beispielsweise einer matrixförmigen Anordnung von Mikrobolometern, erzeugen. Eine Anordnung von Detektorelementen in einer Matrix (Array) werden fortan als "focal plane array" (FPA) bezeichnet.

Die Bildaufnahme erfolgt in sogenannten "Frames". Hierbei wird unter einem Frame derjenige Datensatz verstanden, der die zu einem Auslesezeitpunkt einem Bild zugeordneten Intensitätswerte der einzelnen Detektorelemente umfasst. Die in ihrer Höhe sowie in ihrer räumlichen Anordnung definierten Intensitätswerte der einzelnen Detektorelemente werden in den Frames als Pixel bezeichnet. Nachfolgend werden Aufnahmen, die tatsächlich ein Abbild der Umgebung darstellen als Bildframes bezeichnet, während Aufnahmen, durch die lediglich interne Referenzdaten erfasst werden als Untergrundframe bezeichnet werden. Interne Referenzdaten können insbesondere durch Untergrundframes erfasst sein, durch die ein Referenzobjekt aufgenommen ist. Die Bild- bzw. Untergrundframes können nach dem Auslesen verändert, insbesondere korrigiert, gespeichert und visuell wahrnehmbar angezeigt werden. Die (korrigierten) Bild- bzw. Untergrundframes sind die Grundlage für die ausgegebenen, visuell wahrnehmbaren Wärme- bzw. Untergrundbilder.

Die einzelnen Detektorelemente der FPA's werden üblicherweise mit einer Vorspannung (Bias) beaufschlagt und lassen dann eine temperaturabhängige Stromstärke zu. Wird das FPA über eine Infrarot-Optik belichtet, kann ein Wärmebild realisiert werden.

Allerdings weisen die einzelnen Detektorelemente, insbesondere Mikrobolometer-Widerstände, eine als "Non-Uniformity" bezeichnete uneinheitlichen Sensitivität auf, welche zum einen auf die eigene Erwärmung jedes einzelnen Mikrobolometers durch den Bias zurückgeht, zum anderen auf fertigungsbedingten Toleranzen beruht. Durch die uneinheitliche Sensitivität beinhalten die Daten der Intensitäten der Pixel eines jeden Bildframes Beiträge, die als Rauschen betrachtet werden können und eine Fehlerquelle bei der Erstellung eines Wärme- oder Untergrundbildes darstellen.

Mit "Non-Uniformity-Correction" (NUC) werden Verfahren bezeichnet, mittels denen eine uneinheitliche Sensitivität der einzelnen Detektorelemente ausgeglichen wird. Die Unterschiede in der Sensitivität der Detektorelemente kann größer sein als die Intensitätsschwankungen im Ursprungsbild selber und muss daher in der Praxis immer korrigiert werden, um ein Wärmebild zu erhalten, welches eine reale Temperaturverteilung wiedergibt. Die Verteilung und die Höhe der Beiträge des Rauschens zu den einzelnen Intensitäten der Pixel lassen sich aus den Untergrundframes ableiten.

Dabei werden im Wesentlichen zwei Ansätze der NUC verfolgt: 1) referenz-basierte Verfahren, bei denen zu Beginn der Kameranutzung kalibrierte Bildframes verwendet werden und 2) szenen-basierte Verfahren, bei denen während des Betriebes der Wärmebildkamera kontinuierlich oder zumindest wiederholt die Bildframes korrigiert werden.

Bei bekannten Lösungen wurde das FPA thermostatiert. In neueren Lösungen wird die Substrattemperatur entweder direkt durch einen Substrattemperatursensor und/oder indirekt mittels eines thermisch kurzgeschlossenen Mikrobolometers bestimmt, dessen Signal als Referenz für die Substrattemperatur dient. In der Regel werden beide Verfahren parallel eingesetzt.

Das gewonnene Substrattemperatursignal kann dann, unabhängig davon, ob es auf einer direkten oder indirekten Messung der Substrattemperatur beruht, dazu verwendet werden, den Bias der Detektorelemente zu regeln oder als Eingangsgröße zur numerischen Korrektur anhand gespeicherter Kalibrationsdaten dienen.

Ein Verfahren zur Korrektur von uneinheitlichen Sensitivitäten der Detektorelemente ist in der US 4,298,887 beschrieben. Die Korrekturdaten werden mittels eines rekursiven Filters und einer Arithmetikeinheit ausschließlich aus dem Objektbild abgeleitet. Ein sogenannter Shutter zur Erzeugung von Referenzbildern, durch den der Strahlengang einer Wärmebildkamera zeitweise verschlossen werden kann, ist nicht vorhanden.

In der Praxis habe sich shutterlose Verfahren bislang noch nicht durchgesetzt. Gründe hierfür sind, dass das Verfahren nicht die gewünschte Qualität der Wärmebilder liefert, da, wegen der fehlenden internen Referenz (Shutter), zu geringe absolute Messgenauigkeit erreicht werden. Zudem muss sich die Objektszene regelmäßig ändern, weshalb die shutterlosen Verfahren für festinstallierte Kamera nicht anwendbar sind.

Es ist üblich, im Wechsel mit der Aufnahme eines Bildframes in regelmäßigen Zeitabständen eine als Shutter bezeichnete und in dem Strahlengang der Wärmebildkamera angeordnete Verschlusseinheit zu schließen, welche den abbildenden Strahlengang unterbricht. Die geschlossene Verschlusseinheit ist ein definiertes Objekt zur Infrarot-Bestrahlung des FPA's, da auch die Verschlusseinheit im Infrarotbereich ein durch seine Temperatur parametrisierter Strahlungsemitter ist. Allerdings sind die strahlungsphysikalischen Eigenschaften der Verschlusseinheit weitgehend bekannt. Ist die Verschlusseinheit geschlossen, liefert das FPA Untergrundframes, welche zur Korrektur der Bildframes verwendet werden können.

Ein bekanntes Verfahren zur Korrektur der Bildframes ist die Zweipunktkorrektur. Dabei werden nacheinander mindestens zwei Frames des selben Bildes aufgenommen und durch Vergleich der Daten der einzelnen Pixel eine, zumeist nichtlineare, Kennlinie erstellt. Diese Kennlinie wird durch eine Gerade genähert, welche die Kennlinie in mindestens zwei Punkten schneidet (Zwei-Punkt-Korrektur). Für eine solche Näherung (Approximation) kann eine allgemeine Geradengleichung:

$$(1) \qquad f(y) = ax + b$$

angegeben werden, wobei a der Anstieg (Gain), b der Schnittpunkt mit der Ordinate bei $x_0$ (Offset) und f(y) der genäherte Wert der Daten des FPA's ist (z.B. Harris et al., IEEE Transactions on Image Processing 8 8 (1999), 1148-1151).

Es wird hierbei per se keine Festlegung getroffen, nach welchen Kriterien die nichtlineare Kennlinie durch die Gerade approximiert wird, d.h. welches mathematische Verfahren der Approximation zugrunde gelegt wird. In der Praxis ist es auch durchaus möglich, dass die nichtlineare Kennlinie überhaupt nicht bekannt ist, und Gain und Offset auch ohne ihre Kenntnis, z. B. anhand einer Kalibrierung, festgelegt werden. Auch sind nicht-lineare Approximationen aus dem Stand der Technik, beispielsweise aus der US 2009/0273675 A1, bekannt

In der US 2009/0273675 A1 ist ein Verfahren zur Korrektur von uneinheitlichen Sensitivitäten von Detektorelementen bei Wärmebildkameras offenbart, bei dem der Strahlengang einer Wärmebildkamera periodisch durch eine Verschlusseinheit über eine Verschlussphase unterbrochen wird. Während einer ersten Verschlussphase wird durch ein FPA das Ausgangssignal eines jeden Detektorelementes erfasst und einer Prozessoreinheit zugeführt. Mittels dieser Daten wird mindestens eine in der Prozessoreinheit erste Karte der Temperaturverteilungen über das FPA aktualisiert und eine zweite Karte erstellt, die in der Prozessoreinheit hinterlegt sind. Die Daten der mindestens einen ersten Karte und die Daten der zweiten Karte stammen aus verschiedenen Verschlussphasen und werden durch die Prozessoreinheit mittels einer mathematischen Funktion (Gerade, Polynom) approximiert. Diese Funktion wird dann zur Interpolation zwischen der mindestens ersten und der zweiten Karte verwendet, um Variationen in den Daten der einzelnen Detektorelemente zu kompensieren und um eine neue Karte der Temperaturverteilungen zu erstellen Mit Hilfe der neuen Karte können Variationen für jedes Detektorelement individuell oder über alle Detektorelemente kompensiert werden. Durch die Lösung gemäß der US 2009/0273675 A1 ist es möglich, Wärmebildkameras individuell, wiederholt und auch während ihres Betriebes zu kalibrieren.

Nachteilig an dem vorstehend benannten Stand der Technik ist, dass einzelne Bildframes, deren Daten Überhöhungen in positiver oder negativer Richtung (Peaks) aufweisen, einen unverhältnismäßig starken und langanhaltenden Einfluss auf die für die Korrektur verwendete Funktion ausüben. Überhöhungen von Daten, die lediglich stochastisch auftreten, können sich also langfristig nachteilig auf das Verfahren auswirken.

Ferner ist in der GB 23 36 051 A ein Imager offenbart, der die auf den Detektor treffende Strahlung mittels eines permanent mit hoher Drehzahl rotierenden Choppers moduliert, indem er den Strahlengang periodisch im Wechsel für ein Frame öffnet und für ein Frame schließt. Aus solchen Bildpaaren (mit offenem/geschlossenem Strahlengang) wird eine Korrektur für den Bildhintergrund und die Signaldrift abgeleitet. Bei diesem auf Offen-Geschlossen-Bildpaaren beruhenden Konzept ist nachteilig, dass dabei ein permanent mit hoher Drehzahl rotierender Chopper erforderlich ist und 50% aller ausgelesenen Frames für die reale Bildaufnahme verloren gehen.

Des Weiteren ist in der US 5 118 943 A eine Vorrichtung zur Korrektur von Fehlern einer Bildsequenz für einen integrierenden IR-Matrixsensor beschrieben, der in zwei separaten Stufen die Korrektur vornimmt. Dabei wird in der erste Stufe die Korrektur auf Basis einer Untergrundtemperatur und in einer zweiten Stufe als eine feste Korrektur vorgenommen, die faktisch die Feinkorrektur des Ausgangssignals der ersten Stufe vornimmt, indem ein Addierer den Restfehler der ersten Stufe 16mal aufaddiert und in einem Speicher ablegt, der dann nach der Korrektur durch 16 dividiert vom Ausgangssignal der ersten Stufe subtrahiert wird. Das ist faktisch eine arithmetische Mittelwertbildung, die für wechselnde Szenen ungeeignet ist, weil sie zur beabsichtigten Rauschunterdrückung zwangsweise häufigere oder verlängerte Kalibrierphasen (Shutterphasen) benötigt.

Ähnlich ungeeignet ist das in der JP 2002-310804 beschriebene Verfahren der Driftkorrektur, bei dem mittels einer quadratischen Funktion eine Driftschätzung erfolgt. Auf diese Weise wird aus vorhergehenden DFPN-Korrketuren (DFPN - Dark Fixed Pattern Noise) eine driftkompensierte Korrektur berechnet, wobei aber offensichtlich keine Maßnahmen zur Verkürzung oder Einsparung von einzelnen oder regelmäßigen Shutterphasen vorgesehen sind.

Aus der WO 1997/028630 1 ist schließlich noch ein Verfahren zur Verbesserung der Bildaufnahme bekannt, bei dem das Gesamtbild aus den Signalen mehrerer Kanäle zusammengesetzt wird, die jeweils nur eine bestimmte Anzahl von Bildspalten übertragen. Wenn diese Kanäle unterschiedliche Gain- und Offset-Parameter haben, müssen die Artefaktstrukturen des Gesamtbildes korrigiert werden. Hierbei kommt ein rekursives Verfahren auf Basis einer Mittelwertbildung zum Einsatz, das für Wärmebildkameras nicht geeignet erscheint, da eine NUC-Korretur im Zusammenwirken mit einem Shutter bei Röntgengeräten unüblich ist.

Alle anderen bekannten Lösungen weisen in der Praxis den erheblichen Nachteil auf, dass sie die Aufnahme von Bildframes oft und lange unterbrechen. Eine Echtzeitdarstellung der Wärmebilder wird damit erheblich beeinträchtigt. Kurzzeitige Fluktuationen der Intensitätswerte und Rauschen werden zudem schlecht geglättet, da Wärmebildaufnahme und Untergrundaufnahme quasi gleichberechtigt miteinander abwechseln. Eine möglicherweise auftretende Langzeitdrift, also Änderungen der Anzeige oder Ausgabedaten eines Messgerätes, die nicht durch äußere Einflüsse bedingt sind, wird nicht gut korrigiert. Wollte man auf naheliegende Weise kurzzeitige Fluktuationen der Intensitätswerte und Rauschen besser glätten und die Langzeitdrift besser korrigieren, so müsste man viele Bildframes und Untergrundframes abspeichern und verrechnen. Dies ist sehr speicheraufwändig und kostet zudem viel Rechenzeit. Ferner wird das Echtzeitbild hierdurch lange und wiederholt unterbrochen. Dies stellt für zeitkritische Echtzeitanwendungen einen erheblichen Nachteil dar.

Die Aufgabe der vorliegenden Erfindung ist es, ein Verfahren vorzuschlagen, mit dem bei geringem Rechenaufwand und bei zugleich stark reduziertem Einfluss einzelner Datenabweichungen eine Korrektur von uneinheitlichen Sensitivität von Detektorelementen bei Wärmebildkameras ermöglicht wird. Es ist weiterhin Aufgabe der Erfindung eine Wärmebildkamera zur Durchführung des erfindungsgemäßen Verfahrens vorzuschlagen.

Die Aufgabe wird durch ein Verfahren zur Korrektur einer uneinheitlichen Sensitivität von Detektorelementen bei Wärmebildkameras nach Anspruch 1 gelöst.

Eine Korrektur mindestens eines Bildframes kann pixelweise oder einheitlich für alle Pixel erfolgen.

Mit dem Auslesen je eines neuen Untergrundframes stehen jeweils neue Daten für eine Aktualisierung des bereits vorhandenen aktualisierten Untergrundframes zur Verfügung, weshalb aus dem bereits vorhandenen aktualisierten Untergrundframe ein zu aktualisierendes Untergrundframe wird.

Es sei hierbei angemerkt, dass die Untergrundframes, welche zur Erzeugung eines aktualisierten Untergrundframes verwendet werden, entweder aus einer einzelnen oder aus mehreren Verschlussphasen stammen können. Es ist hierbei auch nicht erforderlich, alle Untergrundframes einer jeweiligen Verschlussphase zu verwenden, sondern es können einzelne Untergrundframes ausgewählt werden. Es kann beispielsweise sinnvoll sein, jeweils ein erstes und ein letztes Untergrundframe einer Verschlussphase auszuwählen oder immer eines oder mehrere Untergrundframes aus der Mitte einer Verschlussphase zu wählen oder die Auswahl nach anderen Kriterien vorzunehmen.

Es ist ein Grundgedanke der Erfindung, dass die Daten aller bereits verwendeten Untergrundframes in dem aktualisiertem bzw. dem zu aktualisierendem Untergrundframe erhalten bleiben (akkumuliert werden) und anteilig zur Korrektur mindestens eines Bildframes beitragen. Das jeweilige, aktualisierte Untergrundframe wird iterativ aus den bisherigen und den neu aufgenommenen und verwendeten Untergrundframes erzeugt.

Die Berechnung und Verwendung eines akkumulierten, gewichteten Mittelwertes hat den großen Vorteil, dass durch eine geeignete Wahl der ersten und zweiten Faktoren bestimmt werden kann, wie stark sich die Daten eines neu aufgenommen Untergrundframes auf das aktualisierte Untergrundframe und damit langfristig auf die Korrektur mindestens eines Bildframes, auswirkt.

Für jedes Untergrundframe sowie für jedes Pixel eines jeden Untergrundframes können erste und zweite Faktoren ausgewählt werden.

Erster und zweiter Faktor werden im Sinne einer prozentualen und damit standardisierten, Gewichtung verwendet, wobei eine Gewichtung von 100% einem Faktor von Eins entspricht. Es ist daher ebenfalls im Rahmen der Erfindung liegend, wenn ein von Eins verschiedener Zahlenwert als einer Gewichtung von 100% entsprechend gewählt wird.

Wird der erste Faktor größer als der zweite Faktor gewählt, geht das zu aktualisierende Untergrundframe mit einem höheren Gewicht in das aktualisierte Untergrundframe ein als das neu aufgenommene Untergrundframe. Die Wahl des ersten Faktors kann in Abhängigkeit von verschiedenen Betriebsbedingungen der Wärmebildkamera sowie abhängig von den zu erzielenden Qualität der Korrektur des mindestens einen Bildframes erfolgen. Es ist eine sehr vorteilhafte Ausführung des erfindungsgemäßen Verfahrens, wenn der erste Faktor während des Betriebes der Wärmebildkamera angepasst wird. Dabei ist es vorteilhaft, wenn über Betriebsphasen, über die sich die Betriebsbedingungen der Wärmebildkamera stark verändern, die Beiträge neu aufgenommener Untergrundframes an den aktualisierten Untergrundframes höher sind, als über Betriebsphasen, über die nur geringe Änderungen der Betriebsbedingungen vorliegen.

Es ist daher möglich, dass der erste Faktor mit Eins (100%) gewählt ist, wodurch eine Aktualisierung des zu aktualisierenden Untergrundframes so erfolgt, dass das jeweils vorhandene aktualisierte Untergrundframe durch ein jeweils neu aufgenommenes Untergrundframe vollständig ersetzt wird. Dabei bleibt das in dem jeweiligen neu aufgenommenen Untergrundframe vorhandene, durch die uneinheitliche Sensitivität der Detektorelemente bedingte, Rauschen erhalten.

Es ist ferner möglich, dass der erste Faktor mit 0,5 (50%) gewählt ist, wodurch das neu aufgenommene Untergrundframe einen gleichen Beitrag an der Erzeugung des aktualisierten Untergrundframes hat wie das zu aktualisierende Untergrundframe. Durch eine solche Wahl des ersten Faktors wird eine geringe Reduzierung des Rauschens bewirkt.

Um die Reduzierung des Rauschens weiter zu erhöhen ist es möglich, dass der erste Faktor zwischen 0,25 (25%) und weniger als 0,5 (50%) gewählt ist, wodurch das neu aufgenommene Untergrundframe einen geringeren Beitrag an der Erzeugung des aktualisierten Untergrundframes hat als das zu aktualisierende Untergrundframe.

Eine starke Reduzierung des Rauschens wird erreicht, wenn der erste Faktor zwischen 0,1 (10%) und weniger als 0,25 (25%) gewählt ist.

Dadurch wird in äußerst vorteilhafter Weise der Einfluss von stochastisch auftretenden Variationen und Peaks der Daten auf das aktualisierte Untergrundframe gezielt herabgesetzt.

Durch die Wahl des ersten Faktors und die damit einhergehende Festlegung des zweiten Faktors kann der Einfluss eines neu aufgenommenen Untergrundframes auf das aktualisierte Untergrundframe gesteuert werden kann. Vorzugsweise werden die Parameter des erfindungsgemäßen Verfahrens wie die Wahl des ersten Faktors, die Anzahl der Untergrundframes und die Dauer der Verschluss- und Bildphasen auf die Dynamikbereiche der Detektorelemente abgestimmt.

Es besteht die Möglichkeit, dass das aktualisierte Untergrundframe aus Untergrundframes erzeugt wird, die alle in derselben Verschlussphase aufgenommen werden. Weiterhin ist es möglich, dass das zur Korrektur von mindestens einem Bildframe verwendete aktualisierte Untergrundframe aus Untergrundframes erzeugt wird, die während mindestens zweier Verschlussphasen aufgenommen wird. Zwischen den betreffenden Verschlussphasen können eine oder mehrere Bildphasen sowie eine oder mehrere Verschlussphasen liegen.

Das erste zu aktualisierende Untergrundframe ist vorzugsweise ein qualitativ guter Datensatz (Frame) ohne Peaks. Es kann beispielsweise ein einzelnes Untergrundframe oder ein Untergrundframe mit Mittelwerten aus einer Anzahl von Untergrundframes sein.

Das mindestens eine zu korrigierende Bildframe wird vorzugsweise zeitlich unmittelbar angrenzend zu mindestens einer Verschlussphase aufgenommen, in der die verwendeten Untergrundframes aufgenommen werden. Das Bildframe kann dabei unmittelbar auf die Verschlussphase folgen oder unmittelbar vor ihr liegen.

Es ist jedoch auch möglich, dass das mindestens eine zu korrigierende Bildframe zeitlich nicht unmittelbar angrenzend zu derjenigen Verschlussphase aufgenommen wird, in der die zur Korrektur des mindestens einen Bildframes verwendeten Untergrundframes aufgenommen werden.

Die Frames können in Speichern abgelegt, dort bearbeitet und von diesen wieder bereitgestellt werden. Es ist jedoch auch möglich, ganz oder teilweise auf Speicher zu verzichten und die Frames in einem kontinuierlichen Datenstrom zu verrechnen. Dies hat den Vorteil, dass auf eine Zwischenspeicherung verzichtet werden kann, welche bei den angestrebten hohen Datenraten zeitkritisch und teuer ist.

Die Detektoreinheit wird mit einer Frequenz in einem Bereich von 25 bis 120 Hz ausgelesen, wobei eine Bereich von 50 Hz bevorzugt ist.

Die Dauer einer Verschlussphase wird vorzugsweise zwischen 0,05 und 5 Sekunden gewählt, wobei eine Dauer von 0,1 bis 0,2 Sekunden besonders günstig ist. Dagegen wird die Dauer einer Bildphase zwischen 10 Sekunden und 5 Minuten gewählt.

Dadurch wird in äußerst vorteilhafter Weise erreicht, dass die Erzeugung von Echtzeitbildern nur selten und kurz unterbrochen wird, was zu einer wesentlichen Verbesserung der Abbildungsqualität und zu einer Ausweitung der Verwendungsmöglichkeiten des erfindungsgemäßen Verfahrens führt.

Es ist mittels des erfindungsgemäßen Verfahrens möglich, auf eine beliebige Anzahl von Untergrundframes eine beliebige Anzahl von Bildframes folgen zu lassen.

In einer vorteilhaften Ausführung folgen im eingeschwungenen Zustand der Detektoreinheit 1000 Bildframes auf 2 Untergrundframes. Während einer Initialisierung und Einschwingphase folgen dagegen auf 2 bis 25 Untergrundframes vorteilhafterweise 250 bis 1000 Bildframes.

Es ist auch möglich, die Dauer von Bildphasen sowie die Dauer der Verschlussphasen zu variieren und an die jeweils aktuell geltenden Anforderungen an die Qualität der Ausgabebilder anzupassen.

Das beschriebene erfindungsgemäße Verfahren zur Korrektur der uneinheitlichen Sensitivität von Detektorelementen bei Wärmebildkameras dient dem Ausgleich von räumlich-zeitlichen, im Wesentlichen stochastisch auftretenden, Variationen der Sensitivität über die Detektoreinheit.

Es ist ferner äußerst vorteilhaft, auch die sich systematisch verändernden Beiträge zur uneinheitlichen Sensitivität von Detektorelementen zu bestimmen und in die Korrektur der Bildframes eingehen zu lassen. Als eine solche weitere Eingangsgrößen kann die Langzeitdrift Berücksichtigung finden, wobei die Langzeitdrift aus der zeitlichen Veränderung der Daten der einzelnen Detektorelemente bestimmt und durch eine Funktionsgleichung beschrieben wird.

Eine Langzeitdrift kann beispielsweise aus der Veränderung der Daten der einzelnen Pixel mindestens zweier Untergrundframes, bestimmt werden. Die Langzeitdrift kann approximiert und durch eine Funktionsgleichung beschrieben werden, wobei die Funktionsgleichung beliebig, vorzugsweise aber linear, gewählt werden kann.

Für einen Approximation der Langzeitdrift kann vorteilhaft das Verfahren der Zwei-Punkt-Korrektur verwendet werden. Der Datensatz für eine Zwei-Punkt-Korrektur eines Bildframes besteht typischerweise aus einem Array von Gainwerten und einem Array von Offsetwerten, die den Pixeln zugeordnet sind. Diese Gain- und Offsetwerte können im Rahmen einer werkseitigen Kalibrierung mit Hilfe von externen Referenzstrahlern generiert und dann im Speicher der Kamera hinterlegt werden oder sie können während des Betriebes der Wärmebildkamera generiert werden. Typischerweise werden die Gainwerte werkseitig kalibriert und die Offsetwerte während des Betriebs der Wärmebildkamera, z. B. mit Hilfe eines Shutters im Strahlengang der Wärmebildkamera, bestimmt.

Eine bevorzugte Ausführung des erfindungsgemäßen Verfahrens zur Korrektur einer uneinheitlichen Sensitivität von Detektorelementen bei Wärmebildkameras, bei dem in Verschlussphasen bei verschlossenem Strahlengang der Wärmebildkamera Untergrundframes von einer internen Referenz aufgenommen, die Veränderungen zwischen den Untergrundframes der Verschlussphasen mittels einer Funktion beschrieben werden und anhand der Funktion ein aktualisiertes Untergrundframe erzeugt wird, welches zur Korrektur mindestens eines Bildframes verwendet wird, ist dadurch gekennzeichnet, dass von mindestens zwei Untergrundframes, die während mindestens einer Verschlussphase aufgenommen wurden, aus der Veränderung der Daten der einzelnen Detektorelemente eine Langzeitdrift der Daten bestimmt wird und dass die Langzeitdrift approximiert und durch eine Funktionsgleichung beschrieben wird und jedem zu korrigierenden Bildframe ein Zählindex zugeordnet wird, welcher die Sequenz der Bildframes seit dem Ende der letzten Verschlussphase angibt und anhand der Funktionsgleichung jedem Bildframe anhand seines Zählindexes ein Korrekturwert zugewiesen wird.

Der Korrekturwert hängt von der Dauer der Bildphase und der Anzahl der zu korrigierenden Bildframes ab.

Werden Bildframes über die Dauer einer Bildphase kontinuierlich aufgenommen und ist die Funktionsgleichung linear, kann die über die Dauer der Bildphase auftretende Langzeitdrift vollständig und gleichmäßig in Form der Korrekturwerte auf die Bildframes verteilt werden. Erfolgt die Aufnahme der Bildframes diskontinuierlich oder ist die gewählte Funktionsgleichung nichtlinear, so wird der für ein Bildframe zutreffende Korrekturwert aus dem Abschnitt der Funktionsgleichung ermittelt, welcher zeitlich mit der Aufnahme des jeweiligen Bildframes zusammenfällt.

Die Langzeitdrift kann auch aus Untergrundframes mehrerer Verschlussphasen ermittelt und dann auch als für die dazwischenliegenden Bildaufnahmephasen gültig angesehen (interpoliert) werden. Sie kann aber auch aus Untergrundframes einer einzelnen Verschlussphase ermittelt und auf eine Bildphase extrapoliert werden. Ferner sind Kombinationen dieser Vorgehensweisen möglich.

Eine Langzeitdrift kann auch über mehrere Bild- und Verschlussphasen hinweg bestimmt werden. Die Langzeitdrift kann beispielsweise so ermittelt werden, dass ein (arithmetischer oder sonst geeignet gewählter) Mittelwert der Daten der Pixel aufeinander folgender Untergrundframes ermittelt und überwacht wird.

Es ist auch möglich, die Dauer von Bildphasen sowie die Dauer der Verschlussphasen angepasst an die ermittelte Langzeitdrift zu variieren. So können beispielsweise bei einer höheren Langzeitdrift die Bildphasen kürzer eingestellt werden als bei einer geringeren Langzeitdrift.

Eine Korrektur uneinheitlicher Sensitivitäten kann auf einzelne Bildframes angewendet werden. Es ist auch möglich, mehrere Bildframes miteinander zu verrechnen, beispielsweise zu mitteln, und erst dann zu korrigieren. Hierdurch lässt sich ein Rauschen noch weiter vermindern.

Das erfindungsgemäße Verfahren ist auch anwendbar, wenn die Verschlussphasen gleich lang oder sogar länger als die Bildphasen sind. Entscheidend ist lediglich die Verrechnung von mindestens zwei Untergrundframes zu einem aktualisierten Untergrundframe.

Ferner sei angemerkt, dass das Anzeigen von Wärme- und Untergrundbildern oder ihre Übertragung zu einem externen Rechner selbstverständlich in der Regel parallel zu einer weiteren Bildaufnahme, und diese in der Regel parallel zur Verrechnung der vorher aufgenommenen Frames erfolgt. Die Steuerung der Verschlusseinheit erfolgt vorzugsweise anhand eines vorher als günstig ermittelten Taktes zur Aufnahme von Untergrundframes und Bildframes, und soll üblicherweise nicht durch die Rechenzeit der Prozessoreinheit oder Wartezeiten zur Datenanzeige und -übertragung beeinflusst sein.

Die Aufgabe wird weiterhin durch eine Wärmebildkamera nach Anspruch 13 gelöst.

Unter "pixelbasiert" wird verstanden, dass ein Bildframe mit einer bestimmten Anzahl und Anordnung von Detektorelementen diskretisiert wird. Durch jedes Detektorelement werden die Daten eines Pixels eines Frames erzeugt. Die Detektorelemente sind üblicherweise in einer Zeilen-Spalten-Matrixstruktur angeordnet, sie können aber auch in einer anderen Anordnung vorhanden sein. Wichtig ist lediglich, dass die Anordnung gleich bleibt, wenn verschiedene Frames miteinander verrechnet werden sollen, wie beispielsweise Bildframe und aktualisiertes Untergrundframe bei der Korrektur mindestens eines Bildframes. "Pixelweise" bedeutet, dass die entsprechende Berechnung für jedes Pixel erfolgt. Parameter wie die Sensitivität können dann von Detektorelement zu Detektorelement variieren.

Die Prozessoreinheit kann mit verschiedenen Speichern zur Speicherung von Daten und Einheiten zur Umwandlung von Daten verbunden sein.

Die erfindungsgemäße Wärmebildkamera kann eine Bildanzeigeeinheit aufweisen, auf der mindestens ein Wärmebild oder Untergrundbild als Ausgabebild anzeigt wird.

Außerdem kann die Wärmebildkamera eine Computerschnittstelle aufweisen, über die das mindestens eine Ausgabebild an einen externen Computer übertragbar ist.

Die Erfindung wird nachfolgend anhand von Ausführungsbeispielen und Abbildungen näher erläutert. Die Figuren zeigen:

Fig. 1    ein erstes Ausführungsbeispiel einer erfindungsgemäßen Wärmebildkamera;

Fig. 2    ein Flussdiagramm einer ersten Ausführungsform des erfindungsgemäßen Verfahrens

Fig. 3    eine schematische Darstellung eines Verlaufs der Intensitäten eines Pixels mit Langzeitdrift über zwei Verschlussphasen und eine Bildphase.

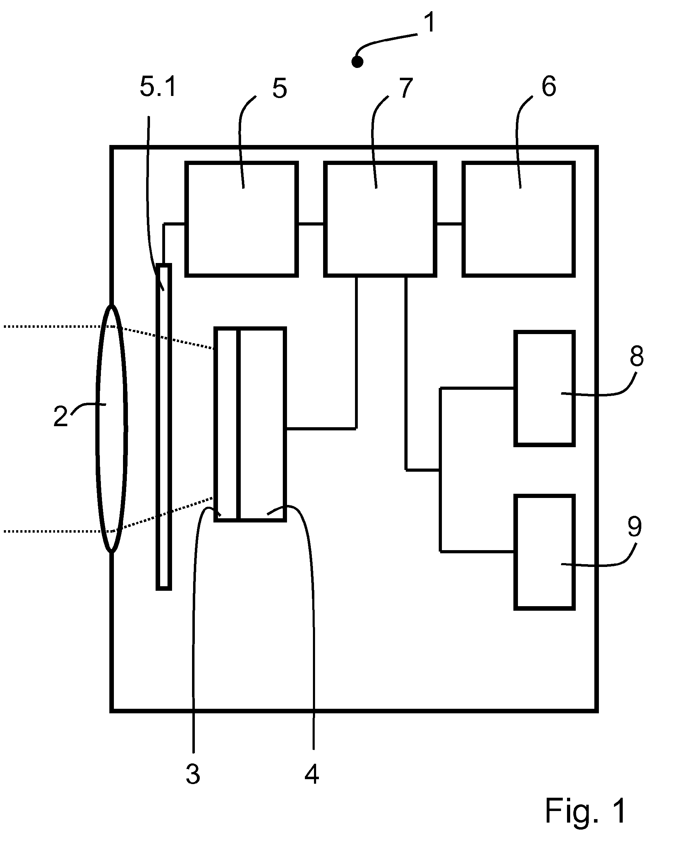

In Fig. 1 sind als wesentliche Elemente einer Wärmebildkamera 1 eine IR-Optik 2, eine in dem Strahlengang (mit Punktlinien angedeutet) der Wärmebildkamera 1 angeordnete Verschlusseinheit 5.1, eine ebenfalls im Strahlengang befindliche und als Mikrobolometer-FPA ausgeführte Detektoreinheit 3, eine Ausleseeinheit 4 zum Auslesen der Detektoreinheit 3, eine Prozessoreinheit 7 zur pixelweisen Verarbeitung, Speicherung und zur Bereitstellung von Daten der Detektoreinheit 3, sowie eine Anzeige 8 zur Darstellung eines Wärme- oder Untergrundbildes als Ausgabebild und eine Schnittstelle 9 zur Verbindung mit externen datenverarbeitenden Anlagen (nicht gezeigt).

Mit der Prozessoreinheit 7 ist weiterhin eine Taktsteuerung 6 und eine Steuerung 5 der Verschlusseinheit 5.1 signalleitend verbunden. Über die Taktsteuerung 6 werden Zeitpunkte und Dauer von Verschlussphasen, über die der Strahlengang durch die Verschlusseinheit 5.1 verschlossen ist und durch die Detektoreinheit 3 Untergrundframes aufgenommen werden, gesteuert. Dazu werden Steuerbefehle von der Taktsteuerung 6 über die Prozessoreinheit 7 an die Steuerung 5 geleitet. Außerdem werden durch die Taktsteuerung 6 Zeitpunkte und Dauer von Bildphasen, über die der Strahlengang geöffnet ist und durch die Detektoreinheit 3 Bildframes aufgenommen werden, gesteuert.

Ebenfalls mit der Prozessoreinheit 7 verbunden ist die Ausleseeinheit 4. Detektoreinheit 3 und Ausleseeinheit 4 sind so aufeinander abgestimmt, dass mit einer Frequenz von 50 Hz Frames ausgelesen und an die Prozessoreinheit 7 weitergeleitet werden.

Die Dauer der Verschlussphasen beträgt 0,1 Sekunden, innerhalb der 2 Untergrundframes neu aufgenommen werden. Über die Dauer einer Öffnungs- bzw. Verschlussbewegung der Verschlusseinheit 5.1, werden bis zu ihrer vollständigen Öffnung bzw. Schließung keine Untergrundframes aufgenommen. Die Dauer der Bildphasen beträgt 20 Sekunden (1000 Bildframes).

Die Prozessoreinheit 7 ist so konfiguriert, dass durch diese ein zu aktualisierendes Untergrundframe, welches in Form von Signaldaten eines jeden Pixels eines zu aktualisierenden Untergrundframes bereitgestellt ist, und mindestens ein neu aufgenommenes Untergrundframe, welches der Prozessoreinheit 7 zugeführt ist, mittels einer Regel in ein aktualisiertes Untergrundframe überführt wird, wobei die Daten eines jeden Pixels des neu aufgenommenen Untergrundframes mit einem ersten Faktor multipliziert werden und zu den, mit einem zweiten Faktor multiplizierten, Daten eines jeden Pixels des zu aktualisierenden Untergrundframes addiert werden, wodurch das zu aktualisierende Untergrundframe zu dem aktualisierten Untergrundframe wird und das so erzeugte aktualisierte Untergrundframe zur Korrektur von mindestens einem Bildframe durch die Prozessoreinheit 7 bereitgestellt wird. Die Prozessoreinheit 7 ist als rekursives Filter ausgebildet, kann aber in weiteren Ausführungen der Erfindung jedes geeignete Bauelement oder jede geeignete Schaltung sein.

Mit der Prozessoreinheit 7 verbunden oder in diese integriert können Speicher zur Speicherung, Bearbeitung und Bereitstellung von Bild- und/oder Untergrundframes sein (nicht gezeigt). In weiteren Ausführungen der erfindungsgemäßen Wärmebildkamera 1 kann auf solche Speicher ganz oder teilweise verzichtet werden, wenn die Bild- und/oder Untergrundframes direkt als Datenstrom weiter verrechnet werden. Ferner können Speicher vorhanden sein (nicht gezeigt), in denen Werte für Gain und Offset hinterlegt sind. Dabei können die Werte für Gain und Offset als Einzelwerte in Form von skalaren Werten oder aber als Matrizen abgelegt sein, wenn Gain und Offset für jede Pixelposition einzeln vorgegeben sind.

Die Prozessoreinheit 7 kann so ausgeführt sein, dass sie sowohl lesend als auch schreibend auf einen oder mehrere Speicher zugreifen kann.

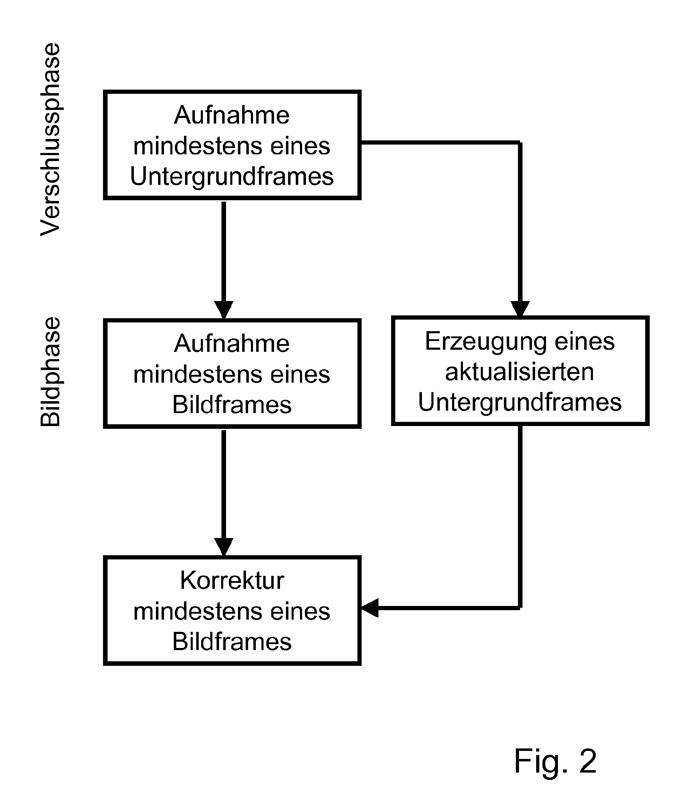

In Fig. 2 ist stark schematisch der Ablauf des erfindungsgemäßen Verfahrens gezeigt. Während einer Verschlussphase werden ein oder mehrere Untergrundframes durch die Detektoreinheit 3 aufgenommen, durch die Ausleseeinheit 4 aus der Detektoreinheit 3 ausgelesen und an die Prozessoreinheit 7 weitergeleitet. Ein aktualisiertes Untergrundframe wird mit jedem zu verwendenden, neu aufgenommenen Untergrundframe zu einem zu aktualisierenden Untergrundframe. Die Aktualisierung erfolgt, indem die Daten eines jeden Pixels des neu aufgenommenen Untergrundframes mit einem ersten Faktor multipliziert und zu den, mit einem zweiten Faktor multiplizierten, Daten eines jeden Pixels des zu aktualisierenden Untergrundframes addiert werden.

Nach Beendigung der Verschlussphase wird über die Dauer einer Bildphase mindestens ein Bildframe aufgenommen und an die Prozessoreinheit 7 weitergeleitet. Die Daten der Pixel des aktualisierten Untergrundframes werden von den Daten der Pixel des mindestens einen Bildframes subtrahiert (Korrektur). Ein aufgrund des so korrigierten Bildframes erzeugtes Ausgabebild (= Wärmebild) ist hinsichtlich der uneinheitlichen Sensitivitäten der Detektorelemente korrigiert.

In weiteren Ausgestaltungen der Erfindung kann die Korrektur auch durch jede geeignete andere Verrechnung der Daten der Pixel erfolgen.

Die Daten jedes Pixels eines aktualisierten Untergrundframes werden gemäß der Vorschrift:

$$(2) \qquad I'_{i,j,n} = g * I_{i,j,n} + (1 - g) * I'_{i,j,n-1}$$

erzeugt. Dabei ist $I'_{i,j,n}$ ein Pixel in einem i Zeilen und j Spalten umfassenden aktualisierten Untergrundframe, n ist ein Zählindex der Untergrundframes, g ist der erste Faktor, $I'_{i,j,n-1}$ ist die Intensität eines Pixels der i-ten Zeile und der j-ten Spalte in einem zu aktualisierenden Untergrundframe und $I_{i,j,n}$ ist die Intensität eines Pixels der i-ten Zeile und der j-ten Spalte in einem verwendeten, neu aufgenommenen Untergrundframe. Die akkumulierten jeweiligen Beiträge der neu aufgenommenen Untergrundframes an dem aktualisierten Untergrundframe folgen der Funktion $y = 1 - \exp(-n_* g_* I'_{i,j,n})$.

Diese nähert sich hier nach einem exponentiellen Anstieg asymptotisch dem Wert 1.

So wird bei einem ersten Faktor g von 0,3 und einem zweiten Faktor (1 - g) von 0,7 nach 10 akkumulierten Untergrundframes 63% des Endwerts erreicht, nach 24 Frames über 90%.

In weiteren Ausführungen des Verfahrens, aber auch in jedem einzelnen Untergrundframe und sogar für jedes einzelne Pixel in jedem einzelnen Untergrundframe, kann der erste Faktor individuell festgelegt werden.

Der aufgezeigte mathematische Zusammenhang lässt sich bei bekannten oder geschätzten Werten von g für die Festlegung einer benötigten Mindestanzahl von Untergrundframes verwenden, wenn eine bestimmte Qualität der aktualisierten Untergrundframes erreicht werden soll. Zudem kann abgeschätzt werden, ab dem wievielten neu aufgenommenen Untergrundframe keine relevante Steigerung in der Qualität der aktualisierten Untergrundframes erreicht wird. Anhand dieser Informationen können die Dauer der Verschluss- und Bildphasen optimiert werden.

Der erste Faktor g wird in einem Beispiel gleich Eins (entspricht 100%) gewählt.
In diesem Fall kommt es zu einer sofortigen Aktualisierung des Untergrundbildes, es findet jedoch keine Rauschunterdrückung statt. Vielmehr tritt das neu aufgenommene Untergrundframe mitsamt dem darin enthaltenen Rauschen an die Stelle des aktualisierten Untergrundframes. In einem Ausgabebild, das von einem so korrigierten Bildframe erstellt wird, ist noch ein deutliches (Rausch-)Muster (pattern) sichtbar. Angewendet wird eine solche Wahl des ersten Faktors während der Initialisierung der Wärmebildkamera 1 nach dem Einschalten oder nach einem Umkonfigurieren der Detektoreinheit 3, wie dies z. B. nach dem Ändern des Bias's und bei einer Anpassung der Dynamikbereiche erfolgt.

In einer weiteren Ausführung wird der erste Faktor g mit 0,5 (entspricht 50%) ausgewählt. Durch eine solche Auswahl wird eine schnelle Aktualisierung des Untergrundframes bewirkt, da ein neu aufgenommenes Untergrundframe mit der gleichen Gewichtung zur Erzeugung des aktualisierten Untergrundframes beiträgt wie das zu aktualisierende. Dabei wird das Rauschen der Untergrundframes leicht unterdrückt. Ein erster Faktor g von 0,5 wird beispielsweise unmittelbar im Anschluss an die Initialisierung des Systems bzw. das Umkonfigurieren des Detektors gewählt, wenn die Signaldrift noch sehr hoch ist.

Wird der erste Faktor g in einem Bereich von über 0,25 (25%) bis unter 0,5 (50%) gewählt, ist der Beitrag des neu aufgenommenen Untergrundframes an dem aktualisierten Untergrundframe geringer als der Beitrag des zu aktualisierenden Untergrundframes.
Es wird eine mittlere Rauschunterdrückung erreicht, so dass sich die Qualität der Korrektur des mindestens einen Bildframes gegenüber einer Wahl des ersten Faktors g von 0,5 oder höher verbessert. Die Durchführung des Verfahrens mit ersten Faktoren g zwischen 0,25 und 0,5 kann verwendet werden, wenn sich die Betriebsbedingungen der Wärmebildkamera verändern, wie dies beispielsweise während einer Einlaufphase der Wärmebildkamera oder durch äußere Einflüsse wie sich verändernde Umgebungstemperaturen gegeben sein kann.

In einer weiteren Ausführung des erfindungsgemäßen Verfahrens wird der erste Faktor g mit 0,1 (10%) bis unter 0,25 (25%) gewählt. Der jeweilige Beitrag der neu aufgenommenen Untergrundframes an dem aktualisierten Untergrundframe ist wesentlich geringer als der Beitrag des zu aktualisierenden Untergrundframes. Dadurch verändert sich das aktualisierte Untergrundframe nur langsam, die Rauschunterdrückung ist sehr hoch, wodurch sich eine bestmögliche Qualität der Korrektur ergibt. Die Wahl eines niedrigen ersten Faktors g erfolgt am Besten, wenn die Wärmebildkamera eine konstante Arbeitstemperatur erreicht hat.

Eine weitere Eingangsgröße für die Korrektur der Bildframes wird aus einer vorliegenden Langzeitdrift L der Detektorelemente ermittelt.
Hierzu werden die Intensitätswerte der Pixel aus den jeweils gemittelten Untergrundframes von zwei aufeinander folgenden Verschlussphasen bestimmt.

Es wird dabei angenommen, dass die Langzeitdrift L in der auf zwei Verschlussphasen folgenden Bildphase weiterhin linear verläuft, so dass eine vorausschauende Driftkorrektur aktueller Bildframes möglich ist.

Jedem der in der Bildphase aufgenommenen Bildframes wird ein Zählindex k zugewiesen, welcher die Sequenz, also die zeitliche Reihenfolge, der Bildframes seit dem Ende der letzten Verschlussphase angibt. Die Bildframes werden in gleichen zeitlichen Abständen und mit gleicher Dauer jeder Aufnahme aufgenommen. Der Korrekturwert für den Offset eines Pixels ergibt sich aus der für die Dauer der Bildphase bestimmten Langzeitdrift L dividiert durch die Anzahl k der Bildframes als L/k für das erste Bildframe, als 2L/k für das zweite Bildframe,... und aus kL/k für das k-te Bildframe. Die Langzeitdrift L wird also vollständig und gleichmäßig auf die k Bildframes verteilt.

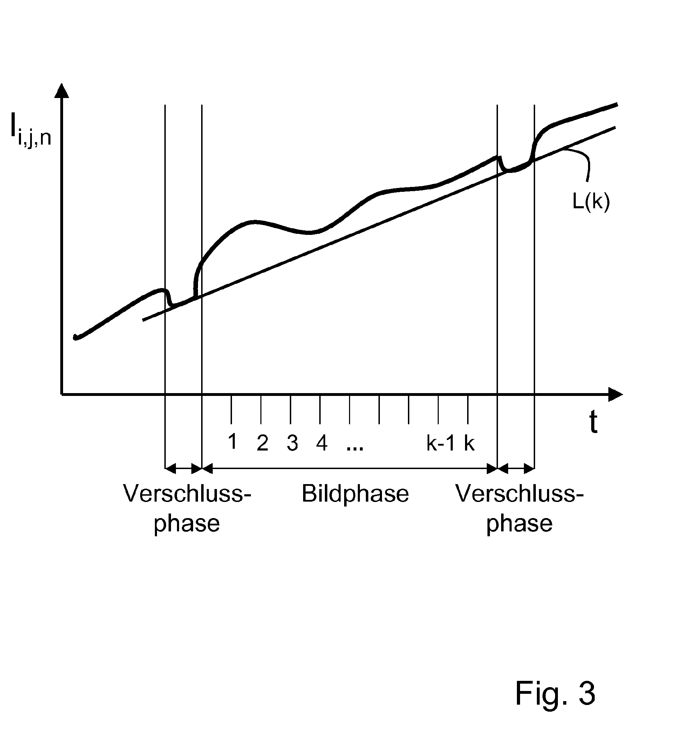

Gemäß dem Schema in Fig. 3 wird ein Anstieg der Intensitätswerte $I_{i,j,n}$ der Pixel mittels der in zwei Verschlussphasen aufgenommenen Untergrundframes festgestellt und durch eine Funktion approximiert. In Fig. 3 ist die Langzeitdrift L durch eine stetige und linear ansteigende Funktion L(k) beschrieben. Die gemessenen Intensitätswerte $I_{i,j,n}$ der Pixel sind daher zu höheren Werten hin verschoben.

Über die Dauer der Bildphase werden k Bildframes aufgenommen (Einteilung der Abszisse). Jedem gemessenen Intensitätswert $1_{:,j,n}$ eines Pixels in einem k-ten Bildframe wird anhand der Funktionsgleichung der zugehörige Wert der Funktion L(k) als Korrekturwert zugewiesen. Der jeweilige Korrekturwert wird von dem Intensitätswert $I_{i,j,n}$ des Pixels, dem er zugewiesen wurde, subtrahiert, wodurch bezüglich der Langzeitdrift L korrigierte Intensitätswerte $I_{i,j,n}$ der Pixel erhalten werden.

Die Korrektur der Langzeitdrift kann in einer weiteren Ausführungsform anstatt pixelweise auch global erfolgen. In diesem Fall werden die Intensitätswerte aller Pixel aus den Untergrundframes von zwei aufeinander folgenden Verschlussphasen jeweils gemittelt. Aus den gemittelten Intensitätswerten wird dann in zu jedem Bildframe ein globaler Korrekturwert berechnet, der in gleicher Weise auf alle Pixel des Frames wirkt.

Die Verteilung der Langzeitdrift L auf die Bildframes kann in weiteren Ausführungen des erfindungsgemäßen Verfahrens auch unvollständig und/oder ungleichmäßig sowie bereits vor der Verrechnung mit dem aktualisieren Untergrundframe erfolgen.

In weiteren Ausführungsformen kann die Langzeitdrift L auch aus Untergrundframes gleicher Verschlussphasen ermittelt werden.

Dem Fachmann wird verstehen, dass der Bereich der vorliegenden Erfindung nicht als durch die speziellen in der Beschreibung angegebenen Details eingeschränkt werden soll, sondern alleine durch die Ansprüche gegeben ist. Innerhalb des durch die Ansprüche gegebenen Schutzumfanges sind eine Vielzahl von Variationen möglich.

Bezugszeichenliste

1    Wärmebildkamera
2    IR-Optik
3    Detektoreinheit
4    Ausleseeinheit
5    Steuerung
5.1  Verschlusseinheit
6    Taktsteuerung
7    Prozessoreinheit
8    Anzeige
9    Schnittstelle

**Patentansprüche**

1. Verfahren zur Korrektur einer uneinheitlichen Sensitivität von Detektorelementen bei Wärmebildkameras (1), bei dem in Verschlussphasen bei verschlossenem Strahlengang der Wärmebildkamera (1) Untergrundframes von einer internen Referenz aufgenommen, die Veränderungen zwischen den Untergrundframes der Verschlussphasen registriert werden und ein aktualisiertes Untergrundframe erzeugt wird, welches zur Korrektur mindestens eines Bildframes verwendet wird, **dadurch gekennzeichnet, dass** das aktualisierte Untergrundframe aus mindestens einem neu aufgenommenen Untergrundframe und einem zu aktualisierenden Untergrundframe erzeugt wird, indem die Daten eines jeden Pixels des neu aufgenommenen Untergrundframes mit einem ersten Faktor multipliziert werden und zu den mit einem zweiten Faktor multiplizierten Daten eines jeden Pixels des zu aktualisierenden Untergrundframes addiert werden, wobei der erste Faktor ein Wert zwischen Null und Eins ist und der zweite Faktor die Differenz zwischen Eins und dem ersten Faktor ist,

**9**

wodurch die Daten eines jeden Pixels des aktualisierten Untergrundframe als akkumulierter, gewichteter Mittelwert vorliegen, dass mehrere Bildframes innerhalb der Dauer einer Bildphase aufgenommen werden, dass die Dauern der Bildphasen von der Anzahl der mehreren Bildframes und deren Dauer bestimmt werden und dass die Dauern der Bildphasen mindestens 50 mal größer als die Dauern der Verschlussphasen gewählt werden.

**2.** Verfahren nach Anspruch 1, **dadurch gekennzeichnet,**
**dass** das aktualisierte Untergrundframe aus Untergrundframes erzeugt wird, die alle in derselben Verschlussphase aufgenommen werden.

**3.** Verfahren nach Anspruch 1, **dadurch gekennzeichnet,**
**dass** das aktualisierte Untergrundframe aus Untergrundframes erzeugt wird, die während mindestens zweier Verschlussphasen aufgenommen werden.

**4.** Verfahren nach Anspruch 2 oder 3, **dadurch gekennzeichnet,**
**dass** das mindestens eine zu korrigierende Bildframe zeitlich unmittelbar angrenzend zu mindestens einer Verschlussphase aufgenommen wird, in der die zur Korrektur des mindestens einen Bildframes verwendeten Untergrundframes aufgenommen worden sind.

**5.** Verfahren nach einem der vorhergehenden Ansprüche, **dadurch gekennzeichnet,**
**dass** die Dauer einer Verschlussphase zwischen 0,05 und 0,2 Sekunden gewählt ist.

**6.** Verfahren nach Anspruch 5, **dadurch gekennzeichnet,**
**dass** die Dauer einer Bildphase zwischen 10 Sekunden und 5 Minuten gewählt ist.

**7.** Verfahren nach Anspruch 6, **dadurch gekennzeichnet,**
**dass** der erste Faktor mit Eins (100%) gewählt ist, wodurch eine Aktualisierung des zu aktualisierenden Untergrundframes so erfolgt, dass das aktualisierte Untergrundframe gleich dem neu aufgenommenen Untergrundframe ist.

**8.** Verfahren nach Anspruch 6, **dadurch gekennzeichnet,**
**dass** das der erste Faktor mit 0,5 (50%) gewählt ist, wodurch das neu aufgenommene Untergrundframe einen gleichen Beitrag an der Erzeugung des aktualisierten Untergrundframes hat wie das zu aktualisierende Untergrundframe.

**9.** Verfahren nach Anspruch 6, **dadurch gekennzeichnet,**
**dass** der erste Faktor zwischen 0,25 (25%) und weniger als 0,5 (50%) gewählt ist, wodurch das neu aufgenommene Untergrundframe einen geringeren Beitrag an der Erzeugung des aktualisierten Untergrundframes hat als das zu aktualisierende Untergrundframe.

**10.** Verfahren nach Anspruch 6, **dadurch gekennzeichnet,**
**dass** der erste Faktor zwischen 0,1 (10%) und weniger als 0,25 (25%) gewählt ist, wodurch das neu aufgenommene Untergrundframe einen geringeren Beitrag an der Erzeugung des aktualisierten Untergrundframes hat als das zu aktualisierende Untergrundframe.

**11.** Verfahren nach einem der vorhergehenden Ansprüche, **dadurch gekennzeichnet,**
**dass** eine Langzeitdrift (L) als eine weitere Eingangsgröße für die Korrektur einer uneinheitlichen Sensitivität von Detektorelementen einer Wärmebildkamera (1) verwendet wird, wobei die Langzeitdrift (L) aus der zeitlichen Veränderung der Daten der einzelnen Pixel bestimmt und als eine Funktion beschrieben wird.

**12.** Verfahren nach einem der Ansprüche 1 bis 11, **dadurch gekennzeichnet,**

- **dass** von mindestens zwei Untergrundframes, die während mindestens einer Verschlussphase aufgenommen wurden, die registrierten Veränderungen der Daten bestimmt und durch eine Funktion beschrieben werden und mittels der Funktion ein aktualisiertes Untergrundframe erzeugt wird und
- **dass** anhand der Funktion der registrierten Veränderungen eine Langzeitdrift (L) approximiert wird und jedem zu korrigierenden Bildframe ein Zählindex zugeordnet wird, welcher die Sequenz der Bildframes seit dem Ende der letzten Verschlussphase angibt und anhand der Funktion jedem Bildframe anhand seines Zählindexes ein Korrekturwert zugewiesen wird.

13. Wärmebildkamera (1) mit einer Verschlusseinheit (5.1) im Strahlengang der Wärmebildkamera (1) zum wahlweisen Öffnen und Schließen des Strahlenganges, mit einer pixelbasierten Detektoreinheit (3) umfassend eine Anzahl von Detektorelementen zur pixelweisen Detektion von Wärmestrahlung und mit einer Prozessoreinheit (7) zur pixelweisen Verarbeitung, Speicherung und zur Bereitstellung von Daten der Detektoreinheit (3), wobei während einer Verschlussphase bei geschlossener Verschlusseinheit (5.1) Untergrundframes und während einer Bildphase bei geöffneter Verschlusseinheit (5.1) Bildframes durch die Detektoreinheit (3) aufgenommen werden können, **dadurch gekennzeichnet**,
die Prozessoreinheit (7) so konfiguriert ist, dass ein aktualisiertes Untergrundframe aus mindestens einem neu aufgenommenen Untergrundframe und einem zu aktualisierenden Untergrundframe erzeugt wird, wobei mehrere Bildframes innerhalb der Dauer einer Bildphase aufgenommen werden, die Dauern der Bildphasen von der Anzahl der mehreren Bildframes und deren Dauer bestimmt werden und die Dauern der Bildphasen mindestens 50 mal größer als die Dauern der Verschlussphasen sind, indem die Daten eines jeden Pixels des neu aufgenommenen Untergrundframes mit einem ersten Faktor multipliziert werden und zu den, mit einem zweiten Faktor multiplizierten, Daten eines jeden Pixels des zu aktualisierenden Untergrundframes addiert werden, wobei der erste Faktor ein Wert zwischen Null und Eins ist und der zweite Faktor die Differenz zwischen Eins und dem ersten Faktor ist, wodurch die Daten jedes Pixels des aktualisierten Untergrundframes als akkumulierter, gewichteter Mittelwert vorliegen.

14. Wärmebildkamera nach Anspruch 13, **dadurch gekennzeichnet,**
**dass** eine Anzeige (8) vorhanden ist auf der mindestens ein Ausgabebild anzeigt wird.

15. Wärmebildkamera nach einem der Ansprüche 13 oder 14, **dadurch gekennzeichnet,**
**dass** die Wärmebildkamera (1) eine Computerschnittstelle (9) aufweist, über die das mindestens eine Ausgabebild an eine externe datenverarbeitende Anlage übertragbar ist.

## Claims

1. Method for correcting a non-uniform sensitivity of detector elements in thermographic cameras (1) in which background frames of an internal reference are recorded in shutter phases when the beam path of the thermographic camera (1) is closed, the variations between the background frames of the shutter phases are logged, and an updated background frame is generated and used for the correction of at least one image frame, **characterized in that** the updated background frame is generated from at least one newly recorded background frame and a background frame to be updated **in that** sums are formed of the data of every pixel of the newly recorded background frame which are multiplied by a first factor and the data of every pixel of the background frame to be updated which are multiplied by a second factor, wherein the first factor is a value between zero and one, and the second factor is the difference between one and the first factor, so that the data of every pixel of the updated background frame are in the form of an accumulated weighted average, that a plurality of image frames is recorded within the duration of an image phase, that the durations of the image phases are determined by the quantity of the plurality of image frames and their duration, and that the durations of the image phases are at least 50 times greater than the durations of the shutter phases.

2. Method according to claim 1, **characterized in that** the updated background frame is generated from background frames which are all recorded in the same shutter phase.

3. Method according to claim 1, **characterized in that** the updated background frame is generated from background frames which are recorded during at least two shutter phases.

4. Method according to claim 2 or 3, **characterized in that** the at least one image frame to be corrected is recorded following immediately in time upon at least one shutter phase in which the background frames used for the correction of the at least one image frame were recorded.

5. Method according to one of the preceding claims, **characterized in that** the duration of a shutter phase is between 0.05 and 0.2 seconds.

6. Method according to claim 5, **characterized in that** the duration of an image phase is between 10 seconds and 5 minutes.

7. Method according to claim 6, **characterized in that** the first factor is one (100%) so that an updating of the background frame to be updated is carried out in such a way that the updated background frame is identical to the newly recorded background frame.

8. Method according to claim 6, **characterized in that** the first factor is 0.5 (50%) so that the contribution of the newly recorded background frame to the generation of the updated background frame is equal to that of the background frame to be updated.

9. Method according to claim 6, **characterized in that** the first factor is between 0.25 (25%) and less than 0.5 (50%) so that the contribution of the newly recorded background frame to the generation of the updated background frame is less than that of the background frame to be updated.

10. Method according to claim 6, **characterized in that** the first factor is between 0.1 (10%) and less than 0.25 (25%) so that the contribution of the newly recorded background frame to the generation of the updated background frame is less than that of the background frame to be updated.

11. Method according to one of the preceding claims, **characterized in that** a long-term drift (L) is used as an additional input variable for the correction of a non-uniform sensitivity of detector elements of a thermographic camera (1), wherein the long-term drift (L) is determined from the time-dependent variation of the data of the individual pixels and is described as a function.

12. Method according to one of claims 1 to 11, **characterized in that** the logged variations in the data of at least two background frames which were recorded during at least one shutter phase are determined and described by a function and an updated background frame is generated by means of the function, and that, based on the function of the logged variations, a long-term drift (L) is approximated and a counting index indicating the sequence of image frames since the end of the last shutter phase is associated with each image frame to be corrected, and a correction value is assigned to every image frame based on its counting index by means of the function.

13. Thermographic camera (1) with a shutter unit (5.1) in the beam path of the thermographic camera (1) for electively opening and closing the beam path, with a pixel-based detector unit (3) comprising a quantity of detector elements for pixel-by-pixel detection of thermal radiation and with a processor unit (7) for pixel-by-pixel processing, storage and provision of data of the detector unit (3), wherein background frames can be recorded by the detector unit (3) during a shutter phase when the shutter unit (5.1) is closed and image frames can be recorded by the detector unit (3) during an image phase when the shutter unit (5.1) is open, **characterized in that** the processor unit (7) is configured in such a way that an updated background frame is generated from at least one newly recorded background frame and a background frame to be updated, wherein a plurality of image frames is recorded within the duration of an image phase, the durations of the image phases are determined by the quantity of the plurality of image frames and their duration, and the durations of the image phases are at least 50 times greater than the durations of the shutter phases, **in that** sums are formed of the data of every pixel of the newly recorded background frame which are multiplied by a first factor and the data of every pixel of the background frame to be updated which are multiplied by a second factor, wherein the first factor is a value between zero and one and the second factor is the difference between one and the first factor so that the data of every pixel of the updated background frame are in the form of an accumulated weighted average.

14. Thermographic camera according to claim 13, **characterized in that** a display (8) on which at least one output image is displayed is provided.

15. Thermographic camera according to one of claims 13 or 14, **characterized in that** the thermographic camera (1) has a computer interface (9) by which the at least one output image can be transmitted to an external data processing system.

**Revendications**

1. Procédé de correction d'une sensibilité non uniforme d'éléments de détecteur dans des cameras thermiques (1) dans lequel des trames de fond d'une référence interne sont enregistrées dans des phases d'obturateur quand le trajet de faisceau de la camera thermique (1) est fermé, les variations entre les trames de fond des phases d'obturateur sont enregistrées, et une trame de fond mise à jour est générée et utilisée pour la correction d'au moins une trame d'image, **caractérisé en ce que** la trame de fond mise à jour est générée d'au moins une trame de fond nouvellement enregistrée et une trame de fond à mettre à jour en formant des sommes des données de chaque pixel de la trame de fond nouvellement enregistrée qui sont multipliées par un premier facteur et des données de chaque pixel de la trame de fond à mettre à jour qui sont multipliées par un second facteur, le premier facteur étant une valeur entre zéro et un et le second facteur étant la différence entre un et le premier facteur, de sorte que les données de chaque pixel de la trame de fond à mettre à jour sont en forme d'une valeur moyenne accumulée et pondérée, qu'une pluralité de trames d'image est enregistrée pendant la durée d'une phase d'image, que les durées des phases d'image sont déterminées par la quantité de la pluralité de trames d'image et leur durée, et que les durées des phases d'image sont au moins 50 fois plus grandes que les durées des phases d'obturateur.

2. Procédé selon la revendication 1, **caractérisé en ce que** la trame de fond mise à jour est générée de trames de fond qui sont toutes enregistrées dans la même phase d'obturateur.

3. Procédé selon la revendication 1, **caractérisé en ce que** la trame de fond mise à jour est générée de trames de fond qui sont enregistrées pendant au moins deux phases d'obturateur.

4. Procédé selon la revendication 2 ou 3, **caractérisé en ce que** l'au moins une trame d'image à corriger est enregistrée de manière immédiatement adjacente dans le temps à au moins une phase d'obturateur dans laquelle les trames de fond utilisées pour la correction de l'au moins une trame d'image étaient enregistrées.

5. Procédé selon une des revendications précédentes, **caractérisé en ce que** la durée d'une phase d'obturateur est entre 0,05 et 0,2 secondes.

6. Procédé selon la revendication 5, **caractérisé en ce que** la durée d'une phase d'image est entre 10 secondes et 5 minutes.

7. Procédé selon la revendication 6, **caractérisé en ce que** le premier facteur est un (100%), de sorte qu'une mise à jour de la trame de fond à mettre à jour est effectuée de telle façon que la trame de fond mise à jour soit identique à la trame de fond nouvellement enregistrée.

8. Procédé selon la revendication 6, **caractérisé en ce que** le premier facteur est 0,5 (50%) de sorte que la contribution de la trame de fond nouvellement enregistrée à la génération de la trame de fond mise à jour est égale à celle de la trame de fond à mettre à jour.

9. Procédé selon la revendication 6, **caractérisé en ce que** le premier facteur est entre 0,25 (25%) et moins que 0,5 (50%) de sorte que la contribution de la trame de fond nouvellement enregistrée à la génération de la trame de fond mise à jour est moins que celle de la trame de fond à mettre à jour.

10. Procédé selon la revendication 6, **caractérisé en ce que** le premier facteur est entre 0,1 (10%) et moins que 0,25 (25%) de sorte que la contribution de la trame de fond nouvellement enregistrée à la génération de la trame de fond mise à jour est moins que celle de la trame de fond à mettre à jour.

11. Procédé selon une des revendications précédentes, **caractérisé en ce qu'**une dérive à long terme (L) est utilisée comme variable d'entrée supplémentaire pour la correction d'une sensibilité non uniforme d'éléments de détecteur d'une camera thermique (1), la dérive à long terme (L) étant déterminée de la variation dépendante du temps des données des pixels individuels et étant décrite comme fonction.

12. Procédé selon une des revendications 1 à 11, **caractérisé en ce que** les variations enregistrées des données d'au moins deux trames de fond qui étaient enregistrées fonction et une trame de fond mise à jour est générée au moyen de la fonction, et que, sur la base de la fonction des variations enregistrées, une dérive à long terme (L) est approximée et un indice de comptage indiquant la séquence des trames d'image depuis la fin de la dernière phase d'obturateur est attribué à chaque trame d'image à corriger, et une valeur de correction est assignée à chaque trame d'image sur la base de son indice de comptage au moyen de la fonction.

13. Camera thermique (1) avec une unité d'obturateur (5.1) dans le trajet de faisceau de la camera thermique (1) pour ouvrir et fermer sélectivement le trajet de faisceau, avec une unité de détecteur (3) basée sur des pixels comprenant une quantité d'éléments de détecteur pour la détection pixel par pixel de rayonnement thermique et avec une unité de processeur (7) pour le traitement, stockage et fourniture pixel par pixel de données de l'unité de détecteur (3), des trames de fond pouvant être enregistrées par l'unité de détecteur (3) pendant une phase d'obturateur quand l'unité d'obturateur (5.1) est fermée et des trames d'image pouvant être enregistrées par l'unité de détecteur (3) pendant une phase d'image quand l'unité d'obturateur (5.1) est ouverte, **caractérisée en ce que** l'unité de processeur (7) est configurée de telle façon qu'une trame de fond mise à jour soit générée d'au moins une trame de fond nouvellement enregistrée et une trame de fond à mettre à jour, une pluralité de trames d'image étant enregistrée pendant la durée d'une phase d'image, les durées des phases d'image étant déterminées par la quantité de la pluralité des trames d'image et leur durée, et les durées des phases d'image étant au moins 50 fois plus grandes que les durées des phases d'obturateur, en formant des sommes des données de chaque pixel de la trame de fond nouvellement enregistrée qui sont multipliées par un premier facteur et des données de chaque pixel de la trame de fond à mettre à jour qui sont multipliées par un second facteur, le premier facteur étant une valeur entre zéro et un et le second facteur étant la différence entre un et le premier facteur de sorte que les données de chaque pixel de la trame de fond mise à jour sont en forme d'une valeur moyenne accumulée et pondérée.

**14.** Camera thermique selon la revendication 13, **caractérisée en ce qu'**un affichage (8) est fourni sur lequel est affichée au moins une image de sortie.

**15.** Camera thermique selon une des revendications 13 ou 14, **caractérisée en ce que** la camera thermique (1) a une interface d'ordinateur (9) par lequel l'au moins une image de sortie peut être transmise à un système de traitement de données externe.

Fig. 1

Verschlussphase

Bildphase

```
┌─────────────────────┐
│      Aufnahme       │
│   mindestens eines  │──────────┐
│   Untergrundframes  │          │
└─────────────────────┘          │
           │                     │
           ▼                     ▼
┌─────────────────────┐  ┌─────────────────────┐
│      Aufnahme       │  │  Erzeugung eines    │
│   mindestens eines  │  │   aktualisierten    │
│     Bildframes      │  │   Untergrundframes  │
└─────────────────────┘  └─────────────────────┘
           │                     │
           ▼                     │
┌─────────────────────┐          │
│      Korrektur      │          │
│   mindestens eines  │◄─────────┘
│     Bildframes      │
└─────────────────────┘
```

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4298887 A
- US 20090273675 A1
- GB 2336051 A
- US 5118943 A
- JP 2002310804 A
- WO 19970286301 A

**In der Beschreibung aufgeführte Nicht-Patentliteratur**

- **HARRIS et al.** *IEEE Transactions on Image Processing,* 1999, vol. 8 (8), 1148-1151